# FASCICULE DE BREVET EUROPEEN

(11) **EP 3 978 784 B1**
(45) Date de publication et mention de la délivrance du brevet: **22.02.2023**
(21) Numéro de dépôt: 21193998.8
(22) Date de dépôt: 31.08.2021
(51) Int. Cl.: F16H 57/04, F16N 7/32, F16N 29/00, F01M 11/00

(54) **SYSTÈME DE LUBRIFICATION AVEC UN RÉSERVOIR DE SECOURS**
SCHMIERSYSTEM MIT EINEM ERSATZBEHÄLTER
LUBRICATION SYSTEM WITH A BACK-UP TANK

(30) Priorité: 01.10.2020 FR 2010022
(43) Date de publication de la demande: 06.04.2022
(73) Titulaire: Airbus Helicopters, 13725 Marignane Cedex (FR)
(72) Inventeur: ZAMPONI, Laurent, 13127 VITROLLES (FR); BELMONTE, Jérôme, 13100 AIX EN PROVENCE (FR); FABRIGAT, Eric, 13880 VELAUX (FR)
(74) Mandataire: GPI Brevets

(56) Documents cités:
- EP-A1- 1 342 644
- EP-A1- 3 104 044
- FR-A1- 2 658 577
- US-A1- 2018 347 687

## Description

La présente invention est du domaine de la lubrification par exemple des boîtes de transmission de puissance, en particulier des boîtes de transmission de puissance destinées à un aéronef à voilure tournante.

La présente invention concerne un système de lubrification muni d'un réservoir de secours destiné à la lubrification d'un système mécanique. Ce système de lubrification est particulièrement adapté à la lubrification d'une boîte de transmission principale de puissance d'un aéronef à voilure tournante.

Un système mécanique comporte généralement des éléments tournants, tels que des arbres et des roulements, ainsi que des éléments de transmission de puissance et de réduction ou d'augmentation de vitesse, tels que des pignons et/ou des engrenages. Il est alors essentiel pour le bon fonctionnement du système mécanique de lubrifier et de refroidir ces éléments par un liquide de lubrification adapté, par exemple par de l'huile. Cette lubrification est en général assurée par un système de lubrification et a pour fonctions principales de limiter l'usure et l'échauffement de ces éléments du système mécanique et, par suite, de prolonger la durée de vie du système mécanique. Sans une telle lubrification, le fonctionnement du système mécanique peut être rapidement dégradé, voire impossible.

Un système de lubrification peut comporter un ou plusieurs circuits de lubrification acheminant le liquide de lubrification d'un réservoir vers les éléments à lubrifier. Un circuit de lubrification comporte notamment un générateur de débit telle une pompe afin d'alimenter en liquide de lubrification le circuit de lubrification et de permettre ainsi sa circulation dans le circuit de lubrification, ainsi que des dispositifs de projection du liquide de lubrification, tel un orifice, un asperseur, un gicleur ou tout moyen équivalent, destinés à pulvériser le liquide de lubrification vers les éléments à lubrifier.

Un circuit de lubrification comporte aussi au moins un réservoir contenant le liquide de lubrification. Un réservoir peut notamment être formé par un carter du système mécanique à lubrifier, par exemple un carter de la boîte de transmission principale de puissance d'un aéronef à voilure tournante. Un circuit de lubrification comporte également des conduites agencées notamment entre la pompe et les dispositifs de projection.

En outre, un circuit de lubrification peut comporter des dispositifs de filtration visant à capter des corps étrangers éventuellement présents dans le liquide de lubrification. Un dispositif de filtration peut comporter différents types de filtres. Un filtre désigné couramment par le terme « crépine » peut par exemple être agencé en amont de la pompe, dans un réservoir. D'autres filtres peuvent aussi être agencés à divers endroit du circuit de lubrification.

Un circuit de lubrification peut aussi comporter un échangeur thermique afin de refroidir le liquide de lubrification réchauffé au contact des éléments à lubrifier.

Toutefois, des fuites peuvent apparaître notamment au niveau de ces conduites ou bien des raccords entre une conduite et un composant du circuit de lubrification, ces fuites étant par exemple provoquées par des contraintes vibratoires et thermiques consécutives au fonction du système mécanique. Suite à de telles fuites, le liquide de lubrification circulant dans le circuit de lubrification et stocké dans un réservoir peut être évacuée partiellement ou entièrement à l'extérieur du circuit de lubrification.

Une fuite peut également apparaître au niveau du réservoir principal provoquant une perte partielle ou totale du liquide de lubrification qu'il contient, en fonction de la position desdites fuites.

Suite à de telles fuites et en cas d'arrêt de la lubrification, des dégradations plus ou moins importantes du système mécanique peuvent apparaître à termes. La conséquence de ces dégradations peut être un fonctionnement dégradé du système mécanique, voire l'arrêt du système mécanique.

Afin de pallier ces conséquences, un système de lubrification peut comporter plusieurs circuits de lubrification. Par exemple, un système de lubrification peut comporter deux circuits de lubrification en parallèle, un premier circuit de lubrification pouvant éventuellement pallier une fuite d'une conduite d'un second circuit de lubrification.

Un système de lubrification peut selon un autre exemple comporter au moins un circuit principal de lubrification et un circuit de lubrification de secours. Le circuit de lubrification de secours a pour but d'assurer, lorsque le circuit principal de lubrification est hors service, une lubrification d'au moins une partie des éléments du système mécanique, à savoir des organes considérés comme essentiels de ce système mécanique, pendant une durée limitée afin d'assurer le fonctionnement de ce système mécanique.

Un circuit de lubrification de secours peut utiliser le liquide de lubrification situé dans le réservoir utilisé également par un circuit principal de lubrification.

Un circuit de lubrification de secours peut alternativement comporter un réservoir de secours dédié et utiliser le liquide de lubrification situé dans ce réservoir de secours. Un réservoir de secours peut être agencé à l'extérieur du système mécanique à lubrifier ou bien directement à l'intérieur de ce système mécanique.

Un réservoir de secours peut être positionné de sorte que le liquide de lubrification s'écoule par gravité depuis ce réservoir de secours, par exemple par l'intermédiaire d'une conduite, uniquement vers les organes essentiels à lubrifier.

Par exemple, selon les différents exemples décrits dans les documents FR 2658577, US 8602166 et US 9624798, le liquide de lubrification peut s'écouler en permanence par gravité depuis un tel réservoir de secours directement sur les organes essentiels à lubrifier. Le réservoir de secours peut être alimenté en permanence par un circuit principal de lubrification et est positionné au-dessus des organes essentiels à lubrifier, à l'intérieur du système mécanique. De fait, en cas de fuite ou de défaillance du circuit principal de lubrification, le réservoir de secours n'est plus alimenté en liquide de lubrification, mais permet d'assurer une lubrification uniquement des organes essentiels pendant un temps limité correspondant à l'épuisement du liquide de lubrification contenu dans ce réservoir de secours.

Les termes « sous », « en dessous » et « au-dessus » s'entendent sensiblement par rapport à la direction de la pesanteur terrestre orientée verticalement vers le bas. De même, le terme « verticale » s'entend selon cette direction de la pesanteur terrestre, à savoir parallèlement à cette direction de la pesanteur terrestre. En outre, les termes « supérieur » et « inférieur » s'entendent également par rapport à la direction de la pesanteur terrestre. Dans l'environnement d'un aéronef, la direction de la pesanteur terrestre est à considérer lorsque cet aéronef est posé normalement sur un sol horizontal sur son atterrisseur.

Un réservoir de secours peut aussi être muni de vannes destinées à libérer sur ordre le liquide de lubrification vers les éléments à lubrifier comme décrit dans le document FR 3045764. Les vannes sont par exemple à commande pyrotechnique, et suite à leur ouverture, le liquide de lubrification s'écoule par gravité jusqu'aux éléments à lubrifier.

Enfin, le document FR 2685758 décrit un circuit de lubrification de secours comportant un réservoir de secours dédié et une canalisation acheminant le liquide de lubrification contenu dans ce réservoir de secours uniquement vers les organes essentiels à lubrifier. Le réservoir de secours peut être pressurisé et l'ouverture d'une vanne permet la circulation du liquide de lubrification dans la canalisation. Ce réservoir de secours peut également être non pressurisé, une pompe alimentant alors la canalisation. Ce réservoir de secours peut ainsi être positionné sans contrainte particulière vis-à-vis des organes essentiels à lubrifier. Le fonctionnement du circuit de secours est assuré pendant un temps limité correspondant à l'épuisement du liquide de lubrification contenu dans le réservoir de secours.

En outre, l'arrière plan technologique de l'invention comporte notamment les documents EP 3104044, EP 1342644 et US 2018/0347687.

Quelle que soit la solution choisie, ces exemples de l'art antérieur proposent, suite à une défaillance ou une fuite, une lubrification limitée dans le temps, mais limitée également uniquement à une partie des éléments du système mécanique, à savoir les organes considérés comme essentiels de ce système mécanique.

La présente invention a alors pour but de proposer une solution alternative pour la lubrification de secours d'un système mécanique permettant de s'affranchir des limitations mentionnées ci-dessus, et permettant une lubrification résiduelle simple et fiable de l'ensemble des éléments du système mécanique nécessitant une telle lubrification pendant une durée limitée et déterminée suite à la présence d'une fuite totale ou d'une défaillance sur le système de lubrification.

La présente invention a par exemple pour objet un système de lubrification d'un système mécanique, le système de lubrification comportant un réservoir principal ainsi qu'un réservoir de secours, un circuit principal de lubrification, le réservoir principal contenant un liquide de lubrification, le circuit principal de lubrification comportant un générateur de débit principal telle une pompe, ainsi que des dispositifs de projection du liquide de lubrification, le circuit principal de lubrification comportant un point d'aspiration principal du liquide de lubrification situé dans le réservoir principal et une conduite d'aspiration principale reliant le point d'aspiration principal au générateur de débit principal, le réservoir de secours comportant une entrée pour recevoir du liquide de lubrification.

Le circuit principal de lubrification peut également comporter de façon usuelle des conduites ou des tuyaux reliant les différents composants du circuit principal de lubrification. Le point d'aspiration principal est constitué par exemple par l'extrémité de la conduite d'aspiration principale située dans le réservoir principal.

Lors du fonctionnement du circuit principal de lubrification, le générateur de débit principal aspire le liquide de lubrification dans le réservoir principal par l'intermédiaire du point d'aspiration principal et le distribue dans les conduites, puis dans les dispositifs de projection afin de lubrifier le système mécanique. L'entrée du réservoir de secours est alors alimentée en liquide de lubrification provenant du réservoir principal.

Le système mécanique est par exemple une boîte de transmission principale de puissance d'un aéronef à voilure tournante.

Le système de lubrification selon l'invention est remarquable en ce qu'il comporte une conduite de sortie en communication fluidique avec le réservoir de secours, la conduite de sortie reliant le réservoir de secours à la conduite d'aspiration principale du circuit principal de lubrification de sorte que le liquide de lubrification s'écoule par gravité dans la conduite de sortie, depuis le réservoir de secours jusqu'à la conduite d'aspiration principale.

En effet, le réservoir de secours est situé au moins partiellement au niveau d'un plan supérieur à un plan au niveau duquel est situé le point d'aspiration principal selon la direction de la pesanteur terrestre, ces plans étant perpendiculaire à cette direction de la pesanteur terrestre, de sorte que le liquide de lubrification s'écoule par gravité dans la conduite de sortie, depuis le réservoir de secours jusqu'à la conduite d'aspiration principale. Lorsque le système mécanique équipe un aéronef, la direction de la pesanteur terrestre est à considérer lorsque cet aéronef est posé normalement sur un sol horizontal sur son atterrisseur. En conséquence, le réservoir de secours étant situé au-dessus du point d'aspiration principal selon la direction de la pesanteur terrestre, le liquide de lubrification situé dans le réservoir de secours peut s'écouler par gravité et de façon continue dans la conduite de sortie, depuis le réservoir de secours jusqu'à la conduite d'aspiration principale.

La conduite d'aspiration principale est à considérer comme étant une communication fluidique située entre le point d'aspiration principal et le générateur de débit principal, cette communication fluidique étant destinée à contenir et/ou à guider le liquide de lubrification entre le point d'aspiration principal et le générateur de débit principal. Par exemple, la conduite d'aspiration principale peut comporter un ou plusieurs tuyaux, un espace situé entre le point d'aspiration principal et le générateur de débit principal...

Le point d'aspiration principal peut être distant du générateur de débit principal. Dans ce cas, la conduite de sortie peut être reliée à tout point de la conduite d'aspiration principale, tant que ce point est situé en dessous du réservoir de secours selon la direction de la pesanteur terrestre.

Le point d'aspiration principal peut être accolé au générateur de débit principal, la conduite d'aspiration principale pouvant alors être confondu avec un orifice d'entrée du générateur de débit principal. Dans ce cas, la conduite de sortie débouche à cet orifice d'entrée du générateur de débit principal. La conduite de sortie en communication avec le réservoir de secours peut ainsi être reliée à cet orifice d'entrée du générateur de débit principal par une de ses extrémités.

En outre, le réservoir de secours est alimenté par le liquide de lubrification provenant du réservoir principal, par exemple soit directement par le liquide de lubrification situé dans le réservoir principal, soit par le liquide de lubrification aspiré dans le réservoir principal et circulant dans le circuit principal de lubrification. En absence de défaillance du système de lubrification visant à vider le réservoir principal du liquide de lubrification qu'il contient, le réservoir de secours est alimenté en permanence et de façon continue en liquide de lubrification et le liquide de lubrification contenu dans ce réservoir de secours est évacué simultanément par la conduite de sortie relié à ce réservoir secours vers la conduite d'alimentation principal. Ce liquide de lubrification évacué du réservoir de secours est ainsi réinjecté dans le circuit principal de lubrification via la conduite d'alimentation principal.

Suite à une défaillance du système de lubrification, le niveau du liquide de lubrification dans le réservoir principal peut baisser jusqu'à un niveau situé en dessous du point d'aspiration principal. Le réservoir de secours n'est également plus alimenté en liquide de lubrification. Une telle défaillance prend par exemple la forme d'une fuite du réservoir principal ou bien d'une fuite d'une conduite d'un autre circuit de lubrification que le circuit principal de lubrification, voire d'une fuite du circuit principal de lubrification.

Cependant, le liquide de lubrification présent dans le réservoir de secours s'écoule par gravité dans la conduite de sortie vers la conduite d'aspiration principale et peut alors avantageusement être aspiré par le générateur de débit principal afin d'alimenter le circuit principal de lubrification et les dispositifs de projection du circuit principal de lubrification lubrifiant ainsi avantageusement le système mécanique.

De la sorte, le système mécanique peut être lubrifié à l'aide des dispositifs de projection du circuit principal de lubrification, malgré une défaillance par exemple du réservoir principal vidant le réservoir principal, pendant une durée limitée correspond au temps que le réservoir de secours se vide. Avantageusement, l'ensemble des éléments du système mécanique nécessitant une lubrification sont lubrifiés contrairement aux solutions de l'art antérieur se limitant à la lubrification d'éléments considérés comme essentiels.

On comprend donc que le système de lubrification selon l'invention peut permettre une lubrification résiduelle efficace suite à une baisse du niveau du liquide de lubrification dans le réservoir principal en dessous du point d'aspiration principal, cette lubrification résiduelle utilisant avantageusement le circuit principal de lubrification existant et notamment ses dispositifs de projection afin de lubrifier le système mécanique.

De fait, le système de lubrification selon l'invention ne nécessite pas de dispositifs de projection spécifiques, ni de nombreuses conduites dédiées à une lubrification de secours. Seules l'implantation du réservoir de secours, son alimentation et la présence de la conduite de sortie sont nécessaires. Dès lors, un réservoir de secours tel que décrit peut éventuellement être installé sur un système mécanique et relié à un circuit de lubrification existant.

Selon un premier mode de réalisation de l'invention, le réservoir de secours peut être situé dans le réservoir principal. L'entrée du réservoir de secours est alors agencée au moins partiellement en dessous d'un niveau nominal du liquide de lubrification dans le réservoir principal, selon la direction de la pesanteur terrestre, lorsque le réservoir principal est sensiblement horizontal. Le niveau nominal du liquide de lubrification dans le réservoir principal est à considérer lorsque le réservoir principal contient une quantité de liquide de lubrification égale ou supérieure à la quantité nominale qu'il doit contenir et lorsque le réservoir principal est à l'horizontal. Le niveau nominal du liquide de lubrification dans le réservoir principal est également à considérer lorsque le système mécanique est à l'arrêt, ce niveau nominal étant également un niveau statique. Dans ces conditions, le réservoir de secours se remplit de façon continue avec le liquide de lubrification présent dans le réservoir principal.

Le réservoir de secours ne crée ainsi avantageusement pas de volume mort, à savoir une masse de liquide de lubrification qui ne sert pas directement à la lubrification du système mécanique, ce réservoir de secours alimentant en permanence le circuit de lubrification principal. De plus, étant situé dans le réservoir principal avec une entrée au moins partiellement en dessous du niveau du liquide de lubrification, le réservoir de secours est rempli de liquide de lubrification dès le démarrage du système mécanique et/ou du circuit principal de lubrification.

Selon un second mode de réalisation de l'invention, le système de lubrification peut comporter une conduite d'alimentation pour alimenter le réservoir de secours en liquide de lubrification à partir du circuit principal de lubrification, la conduite d'alimentation reliant l'entrée du réservoir de secours au circuit principal de lubrification, en aval du générateur de débit principal. De la sorte, le réservoir de secours se remplit de façon continue avec une partie de liquide de lubrification circulant dans le circuit principal de lubrification dès le démarrage de ce circuit principal de lubrification.

En outre, selon ce second mode de réalisation de l'invention et afin de limiter le débit de liquide de lubrification alimentant le réservoir de secours et afin de garantir un débit de liquide de lubrification suffisant alimentant les dispositifs de projection du circuit principal de lubrification, la conduite d'alimentation du réservoir de secours peut être configurée de sorte que le liquide de lubrification circule dans la conduite d'alimentation avec un débit d'alimentation inférieur à un débit principal du liquide de lubrification circulant dans le circuit principal. Le liquide de lubrification circulant dans le circuit principal est aspiré par le générateur de débit principal dans le réservoir principal et un débit de liquide de lubrification alimente les dispositifs de projection du circuit principal de lubrification afin de lubrifier efficacement le système mécanique. Le débit d'alimentation est par exemple de l'ordre de 1 à 5 % du débit principal.

Dans ce but, le système de lubrification peut comporter un réducteur de débit d'alimentation agencé entre le circuit principal et l'entrée du réservoir de secours. Un réducteur de débit d'alimentation peut aussi être agencé au niveau de l'entrée du réservoir de secours ou encore dans la conduite d'alimentation. Un réducteur de débit d'alimentation comporte par exemple une restriction de diamètre ou un orifice calibré.

Un réducteur de débit d'alimentation peut également être agencé à une extrémité de la conduite d'alimentation, en particulier l'extrémité de la conduite d'alimentation permettant de déverser le liquide de lubrification dans le réservoir de secours. Dans ce cas, le réducteur de débit d'alimentation peut être un dispositif de projection adapté pour limiter le débit du liquide de lubrification projeté. Un tel dispositif de projection peut être un orifice calibré, un asperseur, un gicleur ou tout moyen équivalent.

Indépendamment de ces deux modes de réalisation, le système de lubrification selon l'invention peut comprendre une ou plusieurs des caractéristiques qui suivent, prises seules ou en combinaison.

Selon un exemple, la conduite de sortie peut être configurée de sorte que le liquide de lubrification s'écoule dans la conduite de sortie avec un débit de sortie inférieur au débit principal dudit liquide de lubrification circulant dans le circuit principal. En cas de défaillance du système de lubrification et de baisse du volume dans le réservoir principal en dessous du point d'aspiration principal, le circuit principal de lubrification n'est plus alimenté par le liquide de lubrification aspiré dans le réservoir principal, mais uniquement par le liquide de lubrification s'écoulant du réservoir de secours par l'intermédiaire de la conduite de sortie. Le débit de sortie est par exemple de l'ordre de 0.1 à 1 % du débit principal.

Le générateur de débit principal permet d'aspirer le liquide de lubrification s'écoulant de la conduite de sortie du réservoir secours dans la conduite d'aspiration principale, y compris lorsque ce débit de sortie est faible, voire très faible. En effet, le générateur de débit principal est adapté pour aspirer ce faible débit s'écoulant dans la conduite d'alimentation. Le générateur de débit principal peut alors aspirer simultanément ce liquide de lubrification et de l'air présent dans la conduite d'alimentation et provenant du point d'aspiration principal situé alors hors du liquide de lubrification. Le générateur de débit principal comporte par exemple une pompe volumétrique.

Le liquide de lubrification circule alors dans le circuit principal et est acheminé jusqu'aux dispositifs de projection, un brouillard de liquide de lubrification étant alors projeté vers l'ensemble des éléments du système mécanique à lubrifier. Bien que le débit du liquide de lubrification projeté soit faible et nettement inférieur au débit principal, ce brouillard de liquide de lubrification permet d'assurer une lubrification résiduelle suffisante pour autoriser quelques minutes de fonctionnement complémentaire du système mécanique.

Dans le cadre du second mode de réalisation, la majorité du liquide de lubrification circulant alors dans le circuit principal est acheminé vers les dispositifs de projection, une faible partie pouvant se diriger vers le réservoir de secours par l'intermédiaire de la conduite d'alimentation.

Le volume du réservoir de secours étant limité, le débit de sortie peut être prédéterminé afin de permettre d'assurer la lubrification résiduelle du système mécanique pendant une durée prédéterminée fonction de ce débit de sortie et de ce volume. La durée prédéterminé est par exemple de l'ordre de 15 à 20 minutes afin de permettre, lorsque le système mécanique équipe un aéronef, le fonctionnement du système mécanique jusqu'à ce que cet aéronef se pose.

Par ailleurs, afin que le liquide de lubrification s'écoule dans la conduite de sortie avec le débit de sortie voulu, le système de lubrification peut par exemple comporter un réducteur de débit de sortie agencé entre le réservoir de secours et la conduite d'aspiration principale. Un réducteur de débit de sortie peut notamment être agencé dans la conduite de sortie ou au niveau de la sortie du réservoir de secours. Un réducteur de débit de sortie comporte par exemple une restriction de diamètre ou un orifice calibré.

Par ailleurs et pour le second mode de réalisation de l'invention, le débit de sortie est aussi inférieur au débit d'alimentation du liquide de lubrification circulant dans la conduite d'alimentation. De la sorte, en l'absence de défaillance du système de lubrification, le réservoir de secours se remplit plus vite qu'il ne se vide. Le système de lubrification selon l'invention garantit ainsi avantageusement que le réservoir de secours est plein en permanence hors cas de fuite, et en particulier lorsqu'une défaillance apparaîtra.

Selon un exemple, le système de lubrification peut comporter un dispositif de filtration du liquide de lubrification entrant dans le réservoir de secours. Ce dispositif de filtration peut être un filtre, par exemple un filtre papier ou un filtre textile, et permet de capter des corps étrangers et/ou des particules présents dans le liquide de lubrification et de fait de limiter voire d'éviter leur présence dans le réservoir de secours.

Selon un exemple, le réservoir de secours peut être ouvert ou fermé. Le réservoir de secours peut notamment être fermé pour éviter que des particules provenant du système mécanique tombe dans le réservoir de secours.

Notamment lorsque le réservoir de secours est fermé, le réservoir de secours peut comporter un orifice ouvert vers l'extérieur du réservoir de secours. Cet orifice ouvert, dit « surverse » permet l'évacuation du liquide de lubrification arrivant de la conduite d'alimentation et ne pouvant être contenu dans le réservoir de secours. Cet orifice ouvert permet aussi de générer une prise d'air permettant l'écoulement du liquide de lubrification par gravité dans la conduite de sortie.

Selon un exemple, le réservoir de secours peut comporter au moins une paroi anti-déversement. En effet, lorsque le système mécanique équipe un aéronef que cet aéronef vol avec un angle d'inclinaison important, ladite au moins une paroi anti-déversement évite que du liquide de lubrification sorte du réservoir de secours lorsque celui-ci est ouvert ou comporte un orifice ouvert.

Un filtre peut être agencé au niveau de l'entrée du réservoir de secours.

Dans le cadre du second mode de réalisation, un filtre peut être agencé entre l'entrée du réservoir de secours et le circuit principal de lubrification, par exemple sur la conduite d'alimentation.

Selon un exemple, le système de lubrification selon l'invention peut comporter au moins un circuit secondaire de lubrification. Ce circuit secondaire de lubrification peut fonctionner en permanence et en parallèle du circuit principal de lubrification pour lubrifier le système mécanique. Ce circuit secondaire de lubrification peut également fonctionner suite à une défaillance du circuit principal de lubrification et constituer ainsi un circuit de lubrification de secours. La présente invention permet avantageusement de pallier une défaillance de ce circuit secondaire de lubrification.

Par ailleurs, le système de lubrification peut comporter un indicateur de niveau agencé dans le réservoir de secours et configuré pour émettre un signal image d'une information relative à une quantité de liquide de lubrification présente dans le réservoir de secours. Un tel indicateur de niveau peut comporter deux niveaux de seuil, d'une part un premier seuil correspondant à un volume haut de liquide de lubrification dans le réservoir de secours pour indiquer que le réservoir de secours est plein et commence à se vider vers le circuit principal de lubrification, et d'autre part un second seuil correspondant à un volume bas de liquide de lubrification dans le réservoir de secours pour indiquer que le réservoir de secours est vide et par suite la perte de lubrification totale du système mécanique.

La présente invention vise également un système mécanique comportant des éléments tournants, tels que des arbres et des roulements, ainsi que des éléments de transmission de puissance et de réduction ou d'augmentation de vitesse, tels que des pignons et/ou des engrenages.

Ce système mécanique est remarquable en ce qu'il est muni d'un système de lubrification tel que précédemment décrit, le réservoir principal du système de lubrification étant constitué par un carter du système mécanique.

Le système mécanique peut être une boîte de transmission principale de puissance destinée à un aéronef à voilure tournante.

La présente invention vise enfin un aéronef à voilure tournante comportant au moins un rotor principal et au moins une boîte de transmission principale de puissance entraînant en rotation cet au moins un rotor principal. La boîte de transmission principale de puissance peut être munie d'un système de lubrification tel que précédemment décrit, le réservoir principal du système de lubrification étant constitué par un carter de la boîte de transmission principale de puissance.

L'invention et ses avantages apparaîtront avec plus de détails dans le cadre de la description qui suit avec des exemples donnés à titre illustratif en référence aux figures annexées qui représentent :
- la figure 1, un exemple d'un premier mode de réalisation d'un système de lubrification selon l'invention, et
- la figure 2, un exemple d'un second mode de réalisation d'un système de lubrification selon l'invention.

Les éléments présents dans plusieurs figures distinctes sont affectés d'une seule et même référence.

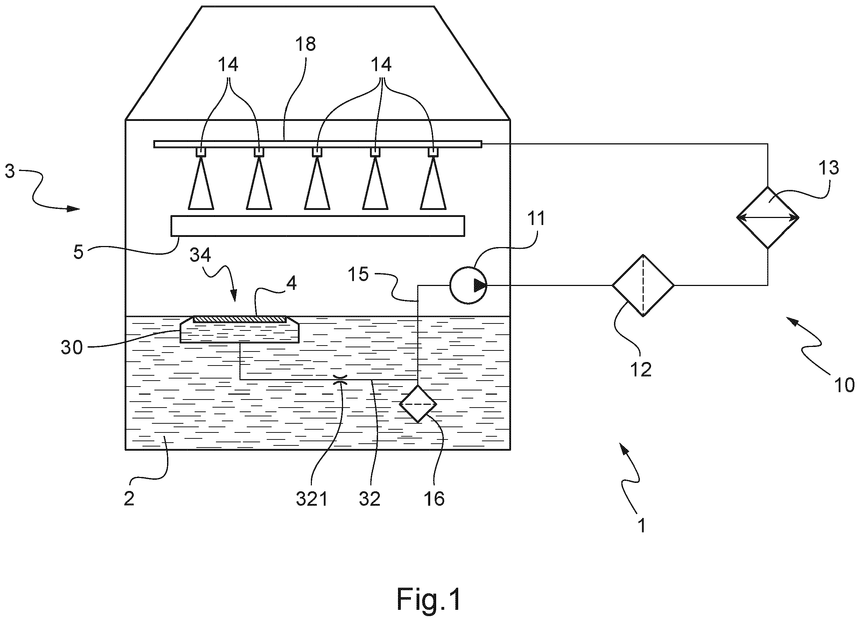

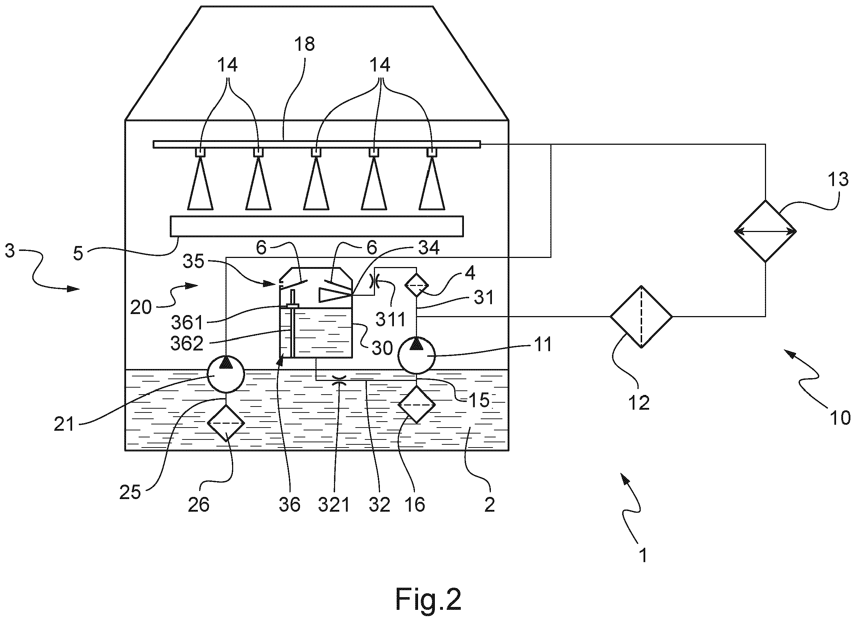

Deux modes de réalisation d'un système de lubrification 1, représentés sur les figures 1 et 2, ont pour fonction de lubrifier un système mécanique 3 comportant notamment des éléments tournants 5, tels que des arbres et des roulements, ainsi que des éléments de transmission de puissance et de réduction ou d'augmentation de vitesse 5, tels que des pignons et/ou des engrenages. Ce système mécanique 3 est par exemple une boîte de transmission principale de puissance équipant possiblement un aéronef à voilure tournante ou autres. Le réservoir principal 2 est par exemple formé par un carter du système mécanique 3.

La figure 1 représente un premier mode de réalisation du système de lubrification 1.

La figure 2 représente un second mode de réalisation du système de lubrification 1.

De façon commune aux deux modes de réalisation, le système de lubrification 1 comporte un réservoir principal 2, un réservoir de secours 30, un circuit principal 10 de lubrification et une conduite de sortie 32 du réservoir de secours 30. Le réservoir principal 2 contient un liquide de lubrification destiné à lubrifier le système mécanique 3.

Le circuit principal 10 de lubrification comporte pour chaque mode de réalisation un générateur de débit principal 11, une ou plusieurs conduites, des dispositifs de projection 14 du liquide de lubrification, un point d'aspiration principal 16 du liquide de lubrification situé dans le réservoir principal 2 et une conduite d'aspiration principale 15 reliant le point d'aspiration principal 16 au générateur de débit principal 11. Les dispositifs de projection 14 sont agencés sur une rampe 18 dans laquelle circule du liquide de lubrification et sont positionnés pour diriger le liquide de lubrification vers des éléments 5 du système mécanique 3 à lubrifier. Le circuit principal 10 de lubrification peut aussi comporter un filtre principal 12, par exemple un filtre papier, destiné à filtrer le liquide de lubrification circulant dans le circuit principal 10 et/ou un échangeur thermique 13 destiné à refroidir le liquide de lubrification circulant dans le circuit principal 10.

Le générateur de débit principal 11 aspire ainsi le liquide de lubrification dans le réservoir principal 2 par l'intermédiaire du point d'aspiration principal 16 et le dirige vers les dispositifs de projection 14, via une ou plusieurs conduites et le cas échéant via l'échangeur thermique 13 et/ou le filtre principal 12, afin de lubrifier les éléments 5 du système mécanique 3.

En outre, le réservoir de secours 30 comporte une entrée 34 par laquelle le réservoir de secours 30 est alimenté en liquide de lubrification provenant directement ou indirectement du réservoir principal 2. De plus, le réservoir de secours 30 est situé plus haut que le point d'aspiration principal 16, selon la direction de la pesanteur terrestre. Plus précisément, le réservoir de secours 30 est situé au moins partiellement au niveau d'un premier plan et le point d'aspiration principal 16 est situé au niveau un second plan, le premier plan et le second plan étant perpendiculaires à la direction de la pesanteur terrestre, le premier plan étant au-dessus du second plan duquel selon la direction de la pesanteur terrestre. La conduite de sortie 32 relie le réservoir de secours 30 à la conduite d'aspiration principale 15. Ainsi, le liquide de lubrification contenu dans le réservoir de secours 30 peut s'écouler par gravité dans la conduite de sortie 32 jusqu'à atteindre la conduite d'aspiration principale 15. Le liquide de lubrification est ensuite aspiré par le générateur de débit principal 11 et introduit dans le circuit principal 10.

Lorsque le niveau du liquide de lubrification dans le réservoir principal 2 atteint un niveau situé en dessous du point d'aspiration principal 16, le circuit principal de lubrification 10 est alimenté uniquement par le réservoir de secours 30, par l'intermédiaire de la conduite de sortie 32. Le réservoir de secours 30 permet ainsi d'alimenter pendant une durée limitée, mais possiblement prédéterminée, le circuit principal 10 en liquide de lubrification afin d'assurer une lubrification résiduelle des éléments 5 du système mécanique 3 via les dispositifs de projection 14.

Avantageusement, la conduite de sortie 32 peut être configurée afin que le liquide de lubrification s'écoule dans la conduite de sortie 32 avec un débit de sortie inférieur à un débit principal du liquide de lubrification circulant dans le circuit principal 10. De la sorte, la lubrification résiduelle est réalisée avec un débit de liquide de lubrification inférieur au débit de la lubrification nominale réalisée en l'absence de défaillance afin que cette lubrification résiduelle soit assurée pendant une durée limitée suffisante notamment pour permettre un atterrissage de l'aéronef lorsque le système mécanique 3 équipe un aéronef.

Par exemple, le débit principal du liquide de lubrification circulant dans le circuit principal 10 peut être de l'ordre de 4000 litres par heure alors que le débit de sortie du liquide de lubrification dans la conduite de sortie 32 peut être de l'ordre de 4 litres par heure. Le volume du réservoir de secours 30 peut être de l'ordre de 1 à 3 litres alors que le volume du réservoir principal 2 peut être de l'ordre de 20 à 40 litres. En conséquence, la lubrification résiduelle peut être assurée pendant une durée de 15 minutes à 1 heure environ.

Afin d'assurer cette limitation du débit de sortie, le système de lubrification 1 peut comporter un réducteur de débit de sortie 321 agencé entre le réservoir de secours 30 et la conduite d'aspiration principale 15, notamment dans la conduite de sortie 32 ou à la sortie du réservoir de secours 30. Un réducteur de débit de sortie 321 peut par exemple comporter une restriction de diamètre ou un orifice calibré. Le réducteur de débit de sortie 321 peut aussi comprendre la conduite de sortie 32 dans son intégralité, le diamètre intérieur de cette conduite de sortie 32 étant limité afin de garantir l'obtention du débit de sortie voulu.

Le système de lubrification 1 représenté sur la figure 2 comporte également un circuit secondaire 20 de lubrification muni d'un générateur de débit secondaire 21, de conduites secondaires, d'un point d'aspiration secondaire 26 du liquide de lubrification situé dans le réservoir principal 2 et d'une conduite d'aspiration secondaire 25 reliant le point d'aspiration secondaire 26 au générateur de débit secondaire 21. Le circuit secondaire 20 est relié à la rampe 18 et aux dispositifs de projection 14 et peut ainsi alimenter les dispositifs de projection 14 en liquide de lubrification afin de lubrifier les éléments 5 du système mécanique 3.

Le point d'aspiration secondaire 26 est situé plus bas que le point d'aspiration principal 16 dans le réservoir principal 2. De la sorte, suite à une fuite sur le circuit principal 10, le niveau de liquide de lubrification va baisser jusqu'au point d'aspiration principal 16. Ensuite, le circuit principal 10 ne peut plus aspirer de liquide de lubrification dans le réservoir principal 2. Le circuit secondaire 20 va alors fonctionner seul afin d'alimenter les dispositifs de projection 14 pour lubrifier le système mécanique 3, malgré cette fuite sur le circuit principal 10.

Par ailleurs, les points d'aspiration principal et secondaire 16,26 peuvent comporter un filtre telle une crépine.

Selon le premier mode de réalisation représenté sur la figure 1, le réservoir de secours 30 est situé dans le réservoir principal 2 et l'entrée 34 est ouverte sur l'extérieur du réservoir de secours 32, sur la face supérieure du réservoir de secours 30. Le réservoir de secours 30 est positionné de sorte que l'entrée 34 soit située au moins partiellement en dessous du niveau nominal du liquide de lubrification dans le réservoir principal 2. Selon la figure 1, l'entrée 34 occupe toute la partie supérieure du réservoir de secours 30. Toutefois, une entrée 34 peut être positionnée différemment sous condition d'être au moins partiellement en dessous du niveau nominal du liquide de lubrification dans le réservoir principal 2. Ainsi, le liquide de lubrification situé dans le réservoir principal 2 peut entrer par l'entrée 34 dans le réservoir de secours 30. De plus, le liquide de lubrification projeté par les dispositifs de projection 14 peut également s'écouler par gravité depuis les éléments 5 du système mécanique 3 éventuellement directement dans le réservoir de secours 30.

De plus, un filtre 4 peut être positionné au niveau de l'entrée 34 afin de filtrer le liquide de lubrification entrant dans le réservoir de secours 30. L'entrée 34 du réservoir de secours 30 peut ainsi, comme représentée sur la figure 1, être couverte par un filtre 4 comportant par exemple une crépine à maille fine pour éviter que des particules entrent dans le réservoir de secours 30.

Selon le second mode de réalisation représenté sur la figure 2, le système de lubrification 1 comporte une conduite d'alimentation 31 reliant l'entrée 34 du réservoir de secours 30 au circuit principal de lubrification 10 en aval du générateur de débit principal 11. La conduite d'alimentation 31 permet ainsi d'alimenter le réservoir de secours 30 avec le liquide de lubrification circulant dans le circuit principal de lubrification 10.

Le réservoir de secours 30 peut être situé dans le système mécanique 3, au-dessus du réservoir principal 2 comme représenté sur la figure 2. Toutefois, le réservoir de secours 30 peut aussi être immergé au moins partiellement dans le réservoir principal 2 ou positionné à l'extérieur du système mécanique 3, tant que le réservoir de secours 30 est situé plus haut que le point d'aspiration principal 16 selon la direction de la pesanteur terrestre.

En outre, la conduite d'alimentation 31 du réservoir de secours 30 peut être configurée de sorte que le liquide de lubrification circule dans la conduite d'alimentation 31 avec un débit d'alimentation inférieur à un débit principal du liquide de lubrification circulant dans le circuit principal 10. De la sorte, la majorité du liquide de lubrification circulant dans le circuit principal 10 est bien dirigée jusqu'aux dispositifs de projection afin de lubrifier les éléments 5 du système mécanique 3. Une faible quantité du liquide de lubrification circulant dans le circuit principal 10 est ainsi dirigée vers le réservoir de secours 30 via la conduite d'alimentation 31.

Par ailleurs, le débit d'alimentation peut être supérieur au débit de sortie du liquide de lubrification circulant dans la conduite de sortie 32 afin le réservoir de secours 30 se remplisse par la conduite d'alimentation 31 plus vite qu'il ne se vide par la conduite de sortie 32. De la sorte, en l'absence de défaillance du système de lubrification 10, le réservoir de secours 30 se remplit progressivement lors du démarrage du circuit principal 10 de lubrification, puis reste plein en permanence. Par exemple, le débit principal peut être de l'ordre de 4000 litres par heure, le débit de sortie peut être de l'ordre de 4 litres par heure et le débit d'alimentation peut être de l'ordre de 40 litres par heure.

Afin d'assurer cette limitation du débit d'alimentation, le système de lubrification 1 peut comporter un réducteur de débit d'alimentation 311 agencé entre le circuit principal 10 et l'entrée 34 du réservoir de secours 30, dans la conduite d'alimentation 31 ou encore au niveau de l'entrée 34 du réservoir de secours 30. Un réducteur de débit alimentation 311 peut par exemple comporter une restriction de diamètre ou un orifice calibré. Le réducteur de débit alimentation 311 peut aussi comprendre la conduite d'alimentation 31 dans son intégralité, le diamètre intérieur de cette conduite d'alimentation 31 étant limité afin de garantir l'obtention du débit d'alimentation voulu.

Un réducteur de débit alimentation 311 peut comprendre un dispositif de projection agencé au niveau de l'entrée 34, le dispositif de projection étant adapté pour limiter le débit du liquide de lubrification projeté.

Le système de lubrification 1 peut aussi comporter un filtre 4, tel qu'un filtre papier par exemple, agencé entre l'entrée 34 du réservoir de secours 30 et le circuit principal de lubrification 10, notamment sur la conduite d'alimentation 31.

Selon l'exemple illustré de ce second mode de réalisation, le réservoir de secours 30 peut par ailleurs être fermé et comporter un orifice 35 ouvert vers l'extérieur du réservoir 30. L'orifice 35 ouvert permet notamment d'obtenir une mise à la pression extérieure du réservoir de secours 30 afin que le liquide de lubrification puisse s'écouler par gravité dans la conduite de sortie 32. L'orifice 35 a aussi fonction de surverse pour permettre l'équilibre du niveau entre le débit entrant et le débit sortant du réservoir de secours 30.

Toutefois, le réservoir de secours 30 peut également être ouvert par exemple sur sa partie supérieure.

Quel que soit le mode de réalisation de l'invention, le réservoir de secours 30 peut comporter au moins une paroi anti-déversement 6, et par exemple deux parois anti déversement 6 comme représenté sur la figure 2. Les parois anti déversement 6 évitent que du liquide de lubrification sorte du réservoir de secours 30 par l'orifice 35 ouvert lorsque le système mécanique 3 est incliné, notamment lorsqu'il équipe un aéronef ou un bateau.

Quel que soit le mode de réalisation de l'invention, le système de lubrification 1 peut aussi comporter un indicateur de niveau 36 agencé dans le réservoir de secours 30 tel que représenté sur la figure 2. L'indicateur de niveau 36 comporte par exemple un flotteur 361 pouvant coulisser sur un axe 362 agencé verticalement et de façon fixe dans le réservoir de secours 30. De la sorte, la position du flotteur 361 le long de l'axe 362 correspond à la quantité de liquide de lubrification présent dans le réservoir de secours 30.

L'indicateur de niveau 36 comporte aussi un capteur délivrant un signal image d'une information indiquant cette position du flotteur 361 le long de l'axe 362 correspond ainsi à une information de la quantité de liquide de lubrification présente dans le réservoir de secours 30.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications.

Par exemple, le système de lubrification 1 selon le premier mode de réalisation peut également comporter au moins une paroi anti déversement 6 et/ou un indicateur de niveau 36.

## Revendications

1. Système de lubrification (1) d'un système mécanique (3), ledit système de lubrification (1) comportant un réservoir principal (2) ainsi qu'un réservoir de secours (30) et un circuit principal de lubrification (10), ledit réservoir principal (2) contenant un liquide de lubrification, ledit circuit principal de lubrification (10) comportant un générateur de débit principal (11) ainsi que des dispositifs de projection (14) dudit liquide de lubrification, ledit circuit principal de lubrification (10) comportant un point d'aspiration principal (16) dudit liquide de lubrification situé dans ledit réservoir principal (2), une conduite d'aspiration principale (15) reliant ledit point d'aspiration principal (16) audit générateur de débit principal (11), ledit réservoir de secours (30) comportant une entrée (34) pour recevoir une partie dudit liquide de lubrification provenant dudit réservoir principal (2),
**caractérisé en ce que** ledit système de lubrification (1) comporte une conduite de sortie (32) en communication fluidique avec ledit réservoir de secours (30), ladite conduite de sortie (32) reliant fluidiquement par gravité ledit réservoir de secours (30) à ladite conduite d'aspiration principale (15).

2. Système de lubrification (1) selon la revendication 1, **caractérisé en ce que** ledit réservoir de secours (30) comporte un orifice (35) ouvert vers l'extérieur dudit réservoir de secours (30).

3. Système de lubrification (1) selon l'une quelconque des revendications 1 à 2,
**caractérisé en ce que** ladite conduite de sortie (32) est configurée de sorte que ledit liquide de lubrification s'écoule dans ladite conduite de sortie (32) avec un débit de sortie inférieur à un débit principal dudit liquide de lubrification circulant dans ledit circuit principal (10).

4. Système de lubrification (1) selon l'une quelconque des revendications 1 à 3,
**caractérisé en ce que** ledit système de lubrification (1) comporte un réducteur de débit de sortie (321) agencé entre ledit réservoir de secours (30) et ladite conduite d'aspiration principale (15).

5. Système de lubrification (1) selon l'une quelconque des revendications 1 à 4,
**caractérisé en ce que** ledit système de lubrification (1) comporte une conduite d'alimentation (31) pour alimenter ledit réservoir de secours (30) en liquide de lubrification à partir dudit circuit principal de lubrification (10), ladite conduite d'alimentation (31) reliant ladite entrée (34) dudit réservoir de secours (30) audit circuit principal de lubrification (10) en aval dudit générateur de débit principal (11).

6. Système de lubrification (1) selon la revendication 5,
**caractérisé en ce que** le système de lubrification (1) comporte un filtre (4) agencé entre ladite entrée (34) dudit réservoir de secours (30) et ledit circuit principal de lubrification (10).

7. Système de lubrification (1) selon l'une quelconque des revendications 5 à 6,
**caractérisé en ce que** ladite conduite d'alimentation (31) dudit réservoir de secours (30) est configurée de sorte que ledit liquide de lubrification circule dans ladite conduite d'alimentation (31) avec un débit d'alimentation inférieur à un débit principal dudit liquide de lubrification circulant dans ledit circuit principal (10).

8. Système de lubrification (1) selon la revendication 7,
**caractérisé en ce que** ledit système de lubrification (1) comporte un réducteur de débit d'alimentation (311) agencé entre ledit circuit principal (10) et ladite entrée (34) dudit réservoir de secours (30) ou bien au niveau de ladite entrée (34) ou encore à une extrémité de ladite conduite d'alimentation (31).

9. Système de lubrification (1) selon l'une quelconque des revendications 1 à 4,
**caractérisé en ce que** ledit réservoir de secours (30) est situé dans ledit réservoir principal (2) et ladite entrée (34) est agencée au moins partiellement en dessous du niveau dudit liquide de lubrification dans ledit réservoir principal (2).

10. Système de lubrification (1) selon l'une quelconque des revendications 1 à 9,
**caractérisé en ce que** ledit système de lubrification (1) comporte un filtre (4) agencé au niveau de ladite entrée (34).

11. Système de lubrification (1) selon l'une quelconque des revendications 1 à 10,
**caractérisé en ce que** ledit réservoir de secours (30) comporte au moins une paroi anti déversement (6).

12. Système de lubrification (1) selon l'une quelconque des revendications 1 à 11,
**caractérisé en ce que** ledit système de lubrification (1) comporte au moins un circuit de lubrification secondaire (20).

13. Système de lubrification (1) selon l'une quelconque des revendications 1 à 12,
**caractérisé en ce que** ledit système de lubrification (1) comporte un indicateur de niveau (36) agencé dans ledit réservoir de secours (30) et configuré émettre un signal image d'une information relative à une quantité de liquide de lubrification présente dans ledit réservoir de secours (30).

14. Système mécanique (3),
**caractérisé en ce que** ledit système mécanique (3) est muni d'un système de lubrification (1) selon l'une quelconque des revendications 1 à 13, ledit réservoir principal (2) dudit système de lubrification (1) étant constitué par un carter dudit système mécanique (3).

15. Système mécanique (3) selon la revendication 14,
**caractérisé en ce que** ledit système mécanique (3) est une boîte de transmission principale de puissance d'un aéronef à voilure.

16. Aéronef à voilure tournante muni d'au moins une boîte de transmission principale de puissance,
**caractérisé en ce que** ladite boîte de transmission principale de puissance est munie d'un système de lubrification (1) selon l'une quelconque des revendications 1 à 13, ledit réservoir principal (2) dudit système de lubrification (1) étant constitué par un carter de ladite boîte de transmission principale de puissance.

## Patentansprüche

1. Schmiersystem (1) eines mechanischen Systems (3), wobei das Schmiersystem (1) einen Haupttank (2) sowie einen Reservetank (30) und einen Hauptschmierkreislauf (10) umfasst, wobei der Haupttank (2) eine Schmierflüssigkeit enthält, wobei der Hauptschmierkreislauf (10) einen Hauptdurchsatzgenerator (11) sowie Vorrichtungen (14) zum Versprühen der Schmierflüssigkeit umfasst, wobei der Hauptschmierkreislauf (10) eine Hauptansaugstelle (16) für die Schmierflüssigkeit aufweist, die sich in dem Haupttank (2) befindet, wobei eine Hauptansaugleitung (15) die Hauptansaugstelle (16) mit dem Hauptdurchsatzgenerator (11) verbindet, wobei der Reservetank (30) einen Einlass (34) aufweist, um einen Teil der Schmierflüssigkeit aus dem Haupttank (2) aufzunehmen,
**dadurch gekennzeichnet, dass** das Schmiersystem (1) eine Auslassleitung (32) in Fluidverbindung mit dem Reservetank (30) aufweist, wobei die Auslassleitung (32) den Reservetank (30) mit der Hauptansaugleitung (15)durch Schwerkraft fluidisch verbindet.

2. Schmiersystem (1) nach Anspruch 1,
**dadurch gekennzeichnet, dass** der Reservetank (30) eine Öffnung (35) aufweist, die zur Umgebung des Reservetanks (30) hin offen ist.

3. Schmiersystem (1) nach einem der Ansprüche 1 bis 2,
**dadurch gekennzeichnet, dass** die Auslassleitung (32) so konfiguriert ist, dass die Schmierflüssigkeit in der Auslassleitung (32) mit einem Auslassdurchsatz fließt, der geringer ist als ein Hauptdurchsatz der Schmierflüssigkeit, die in dem Hauptkreislauf (10) zirkuliert.

4. Schmiersystem (1) nach einem der Ansprüche 1 bis 3,
**dadurch gekennzeichnet, dass** das Schmiersystem (1) einen Ausgangsdurchsatzreduzierer (321) aufweist, der zwischen dem Reservetank (30) und der Hauptansaugleitung (15) angeordnet ist.

5. Schmiersystem (1) nach einem der Ansprüche 1 bis 4,
**dadurch gekennzeichnet, dass** das Schmiersystem (1) eine Zufuhrleitung (31) zum Zuführen von Schmierflüssigkeit aus dem Hauptschmierkreislauf (10) zum Reservetank (30) umfasst, wobei die Zufuhrleitung (31) den Einlass (34) des Reservetanks (30) mit dem Hauptschmierkreislauf (10) stromabwärts von dem Hauptdurchsatzgenerator (11) verbindet.

6. Schmiersystem (1) nach Anspruch 5,
**dadurch gekennzeichnet, dass** das Schmiersystem (1) einen Filter (4) aufweist, der zwischen dem Einlass (34) des Reservetanks (30) und dem Hauptschmierkreislauf (10) angeordnet ist.

7. Schmiersystem (1) nach einem der Ansprüche 5 bis 6,
**dadurch gekennzeichnet, dass** die Zufuhrleitung (31) des Reservetanks (30) so konfiguriert ist, dass die Schmierflüssigkeit in der Zufuhrleitung (31) mit einer Zufuhrrate zirkuliert, die geringer ist als eine Hauptrate der Schmierflüssigkeit, die in dem Hauptkreislauf (10) zirkuliert.

8. Schmiersystem (1) nach Anspruch 7,
**dadurch gekennzeichnet, dass** das Schmiersystem (1) einen Zufuhrdurchsatzreduzierer (311) aufweist, der zwischen dem Hauptkreislauf (10) und dem Einlass (34) des Reservetanks (30) oder an dem Einlass (34) oder an einem Ende der Zufuhrleitung (31) angeordnet ist.

9. Schmiersystem (1) nach einem der Ansprüche 1 bis 4,
**dadurch gekennzeichnet, dass** der Reservetank (30) in dem Haupttank (2) angeordnet ist und der Einlass (34) zumindest teilweise unterhalb des Niveaus der Schmierflüssigkeit in dem Haupttank (2) angeordnet ist.

10. Schmiersystem (1) nach einem der Ansprüche 1 bis 9,
**dadurch gekennzeichnet, dass** das Schmiersystem (1) einen Filter (4) aufweist, der an dem Einlass (34) angeordnet ist.

11. Schmiersystem (1) nach einem der Ansprüche 1 bis 10,
**dadurch gekennzeichnet, dass** der Reservetank (30) mindestens eine Verschüttungsschutzwand (6) aufweist.

12. Schmiersystem (1) nach einem der Ansprüche 1 bis 11,
**dadurch gekennzeichnet, dass** das Schmiersystem (1) mindestens einen Sekundärschmierkreislauf (20) aufweist.

13. Schmiersystem (1) nach einem der Ansprüche 1 bis 12,
**dadurch gekennzeichnet, dass** das Schmiersystem (1) eine Füllstandsanzeige (36) umfasst, die in dem Reservetank (30) angeordnet und konfiguriert ist, um ein Bildsignal einer Information über eine Menge an in dem Reservetank (30) vorhandener Schmierflüssigkeit auszugeben.

14. Mechanisches System (3),
**dadurch gekennzeichnet, dass** das mechanische System (3) mit einem Schmiersystem (1) nach einem der Ansprüche 1 bis 13 versehen ist, wobei der Haupttank (2) des Schmiersystems (1) durch ein Gehäuse des mechanischen Systems (3) gebildet wird.

15. Mechanisches System (3) nach Anspruch 14,
**dadurch gekennzeichnet, dass** das mechanische System (3) ein Hauptkraftübertragungsgetriebe eines Flügelflugzeugs ist.

16. Drehflügelflugzeug mit mindestens einem Hauptkraftübertragungsgetriebe,
**dadurch gekennzeichnet, dass** das Hauptkraftübertragungsgetriebe mit einem Schmiersystem (1) nach einem der Ansprüche 1 bis 13 versehen ist, wobei der Hauptbehälter (2) des Schmiersystems (1) durch ein Gehäuse des Hauptkraftübertragungsgetriebes gebildet ist.

## Claims

1. System (1) for lubricating a mechanical system (3), said lubrication system (1) comprising a main tank (2) together with a back-up tank (30) and a main lubrication circuit (10), said main tank (2) containing a lubrication liquid, said main lubrication circuit (10) comprising a main flow generator (11) together with devices (14) for projecting said lubrication liquid, said main lubrication circuit (10) comprising a main point (16) of suction of said lubrication liquid, the point being situated in said main tank (2), a main suction conduit (15) connecting said main suction point (16) to said main flow generator (11), said back-up tank (30) comprising an inlet (34) for receiving a part of said lubrication liquid coming from said main tank (2),
**characterised in that** said lubrication system (1) comprises an outlet conduit (32) in fluidic communication with said back-up tank (30), said outlet conduit (32) fluidically connecting by gravity said back-up tank (30) to said main suction conduit (15).

2. Lubrication system (1) according to claim 1,
**characterised in that** said back-up tank (30) comprises an orifice (35) open to the exterior of said back-up tank (30).

3. Lubrication system (1) according to either one of claims 1 to 2, **characterised in that** said outlet conduit (32) is configured such that said lubrication liquid flows into said outlet conduit (32) with an outlet flow lower than a main flow of said lubrication liquid circulating in said main circuit (10).

4. Lubrication system (1) according to any one of claims 1 to 3, **characterised in that** said lubrication system (1) comprises an outlet flow restrictor (321) disposed between said back-up tank (30) and said main suction conduit (15).

5. Lubrication system (1) according to any one of claims 1 to 4, **characterised in that** said lubrication system (1) comprises a supply conduit (31) for supplying said back-up tank (30) with lubrication liquid from said main lubrication circuit (10), said supply conduit (31) connecting said inlet (34) of said back-up tank (30) to said main lubrication circuit (10) downstream of said main flow generator (11).

6. Lubrication system (1) according to claim 5,
**characterised in that** the lubrication system (1) comprises a filter (4) disposed between said inlet (34) of said back-up tank (30) and said main lubrication circuit (10).

7. Lubrication system (1) according to either one of claims 5 to 6, **characterised in that** said supply conduit (31) of said back-up tank (30) is configured such that said lubrication liquid circulates in said supply conduit (31) with a supply flow lower than a main flow of said lubrication liquid circulating in said main circuit (10).

8. Lubrication system (1) according to claim 7,
**characterised in that** said lubrication system (1) comprises a supply flow restrictor (311) disposed between said main circuit (10) and said inlet (34) of said back-up tank (30), either at said inlet (34) or at one end of said supply conduit (31).

9. Lubrication system (1) according to any one of claims 1 to 4, **characterised in that** said back-up tank (30) is situated in said main tank (2) and said inlet (34) is disposed at least partially below the level of said lubrication liquid in said main tank (2).

10. Lubrication system (1) according to any one of claims 1 to 9, **characterised in that** said lubrication system (1) comprises a filter (4) disposed at said inlet (34).

11. Lubrication system (1) according to any one of claims 1 to 10, **characterised in that** said back-up tank (30) comprises at least one anti-spill wall (6).

12. Lubrication system (1) according to any one of claims 1 to 11, **characterised in that** said lubrication system (1) comprises at least one secondary lubrication circuit (20).

13. Lubrication system (1) according to any one of claims 1 to 12, **characterised in that** said lubrication system (1) comprises a level indicator (36) disposed in said back-up tank (30) and configured to emit an image signal of an item of information relative to a quantity of lubrication liquid present in said back-up tank (30).

14. Mechanical system (3),
**characterised in that** said mechanical system (3) is equipped with a lubrication system (1) according to any one of claims 1 to 13, said main tank (2) of said lubrication system (1) consisting of a casing of said mechanical system (3).

15. Mechanical system (3) according to claim 14,
**characterised in that** said mechanical system (3) is a main gearbox of a rotary wing aircraft.

16. Rotary wing aircraft equipped with at least one main gearbox, **characterised in that** said main gearbox is equipped with a lubrication system (1) according to any one of claims 1 to 13, said main tank (2) of said lubrication system (1) consisting of a casing of said main gearbox.
